# NEUE EUROPÄISCHE PATENTSCHRIFT

(11) **EP 2 610 278 B2**
(45) Veröffentlichungstag und Bekanntmachung des Hinweises auf die Entscheidung über den Einspruch: **22.12.2021**
(45) Hinweis auf die Patenterteilung: 04.10.2017
(21) Anmeldenummer: 11196205.6
(22) Anmeldetag: 30.12.2011
(51) Int. Cl.: C08G 65/336, C08L 101/10, C09J 201/10

(54) **HÄRTBARE ZUSAMMENSETZUNG AUF BASIS ZUMINDEST EINES POLYMERS, WELCHES POLYMER ZUMINDEST EINE HYDROLYSIERBARE ORGANYL-OXY-SILYLGRUPPE AUFWEIST**
Curable composition comprising a polymer bearing at least one hydrolysable organo-oxy-silyl group
Composition réactive comprenant un polymère portant au moins un groupe hydrolysable organo-oxy-silyl

(43) Veröffentlichungstag der Anmeldung: 03.07.2013
(73) Patentinhaber: Werner Hollbeck GmbH, 45133 Essen (DE)
(72) Erfinder: Stenert, Michael Dr., 45359 Essen (DE); Hollbeck, Christoph Dr., 45134 Essen (DE)
(74) Vertreter: Nunnenkamp, Jörg

(56) Entgegenhaltungen:
- EP-A1- 2 130 850
- WO-A1-2010/139611
- WO-A2-2005/003201
- WO-A2-2006/117338
- US-A1- 2007 066 768
- US-A1- 2007 213 492
- US-A1- 2011 151 154

## Beschreibung

Die Erfindung betrifft eine härtbare Zusammensetzung auf Basis zumindest eines Polymers, welches Polymer zumindest eine hydrolysierbare Organyl-Oxy-Silylgruppe aufweist, wobei die Zusammensetzung zumindest ein Silan C mit einer aus der Gruppe "R¹R²N-(CH₂)ₐ-(CR³R⁴)_{b}-(CH₂)_{c}-SiR⁵_{3-d}(OR⁶)_{d}, R¹R²N-(CH₂)ₐ-(CR³R⁴)_{b}-(CH₂)_{c}-SiR⁵(OR⁶)(OR⁶), R¹R²N-(CH₂)ₐ-(CR³R⁴)_{b}-(CH₂)_{c}-Si(OR⁶)(OR^{6'})(OR^{6"})" ausgewählten Formel aufweist, wobei der Substituent R⁶ und/oder R^{6'} und/oder R^{6"} des Silans C jeweils aus der Gruppe "Alkylrest der Formel -CₙH₂ₙ₊₁, Alkoxyalkylrest mit der Formel -CₙH₂ₙ-O-CₙH₂ₙ₊₁, Alkoxy-alkylrest mit der Formel -CₙH₂ₙ-O-Cₙ₊₁H₂ₙ₊₃" ausgewählt ist.

Härtbare Zusammensetzungen der vorstehend genannten Art sind aus der Praxis grundsätzlich bekannt. In Gegenwart von Luftfeuchtigkeit kondensieren diese Polymere unter Abspaltung der Organyl-Oxy-Gruppen miteinander. Der Gehalt der Organyl-Oxy-Silylgruppen bestimmt dabei den Aufbau der gebildeten, kondensierten Polymere, deren Eigenschaften thermoplastischer, elastischer oder duroplastischer Art sein können. Solche härtbaren Zusammensetzungen werden beispielsweise als Klebstoffe und/oder Dichtstoffe eingesetzt. Zur Verbesserung der Haftung der aus der Praxis bekannten, härtbaren Zusammensetzungen auf verschiedenen Untergründen besteht die Möglichkeit, dem Polymer einen Haftvermittler beizumischen. Nachteilig bei den aus der Praxis bekannten Zusammensetzungen, welche durch höhere Konzentrationen an Silanen chemisch getrocknet werden, ist jedoch, dass der Elastizitätsmodul (E-Modul oder Dehn-Spannungswert) des ausgehärteten Produktes unvorteilhaft hoch ist. Die aus der Praxis bekannten härtbaren Zusammensetzungen sind im ausgehärteten Zustand relativ spröde, was sich nachteilig auf die Langlebigkeit auswirkt. Weiterhin ist es erstrebenswert, die Haltbarkeit der aus der Praxis bekannten härtbaren Zusammensetzungen zu verbessern.

Aus US 2007/066768 A1 ist eine Zusammensetzung bekannt, die auf Silanen basierende Haftvermittler beinhaltet. Diese Mischung weist zumindest einen Haftvermittler auf, der von einem Silan gemäß der Formel R-Si(R¹)₃ gebildet ist.

Der Erfindung liegt das technische Problem zugrunde, eine härtbare Zusammensetzung anzugeben, die sich durch einen niedrigen Elastizitätsmodul und durch ein hohes elastisches Rückstellvermögen auszeichnet, die sich durch eine hervorragende Haftfähigkeit auf diversen Untergründen auszeichnet und die problemlos verarbeitbar ist.

Zur Lösung des technischen Problems lehrt die Erfindung eine härtbare Zusammensetzung der eingangs genannten Art, die dadurch gekennzeichnet ist, dass die Zusammensetzung einen Wassergehalt von 400 ppm bis 1000 ppm aufweist, dass
die Zusammensetzung zumindest ein von dem Silan C verschiedenes Silan D mit einer aus der Gruppe "R⁷R⁸N-(CH₂)_{f}-(CR⁹R¹⁰)_{g}-(CH₂)ₕ-SiR¹¹₃₋ᵢ(OR¹²)ᵢ, R⁷R⁸N-(CH²)_{f}-(CR⁹R¹⁰)_{g}-(CH₂)ₕ-SiR¹¹(OR¹²)(OR^{12'}), R⁷R⁸N-(CH₂)_{f}-(CR⁹R¹⁰)_{g}-(CH₂)ₕ-Si(OR¹²)(OR^{12'})(OR^{12"})"
ausgewählten Formel aufweist,
   dass das Silan C ein primäres (1°) und das Silan D ein sekundäres (2°) oder tertiäres (3°) Amin ist
      und/oder
   dass der Index d größer oder gleich dem Index i ist oder dass der Substituent R¹² und/oder R^{12'} und/oder R^{12"} des Silans D jeweils aus der Gruppe "Alkylrest der Formel -Cₙ₊₁H₂ₙ₊₃, Alkoxyalkylrest mit der Formel -Cₙ₊₁H₂ₙ₊₂-O-CₙH₂ₙ₊₁, Alkoxyalkylrest mit der Formel -Cₙ₊₁H₂ₙ₊₂-O-Cₙ₊₁H₂ₙ₊₃, Alkoxyalkylrest mit der Formel -CₙH₂ₙ-O-Cₙ₊₂H₂ₙ₊₅" ausgewählt ist,
wobei R¹ ein Wasserstoff oder ein Substituent mit 1 bis 15 Kohlenstoffatomen ausgewählt aus der Gruppe "linearer Alkylrest, verzweigter Alkylrest, cyclischer Alkylrest, 1°-Amino-Alkylrest, 2°-Amino-Alkylrest, Arylrest, Alkenylrest" ist,
wobei R² ein Wasserstoff oder ein Substituent mit 1 bis 10 Kohlenstoffatomen ausgewählt aus der Gruppe "linearer Alkylrest, verzweigter Alkylrest, cyclischer Alkylrest, 1°-Amino-Alkylrest, 2°-Amino-Alkylrest, Arylrest, Alkenylrest" ist,
wobei R³ ein Wasserstoff, ein Alkyl-, ein Cycloalkyl-, ein Alkenyl- oder ein Arylrest mit 1 bis 15 Kohlenstoffatomen ist,
wobei R⁴ ein Wasserstoff, ein Alkyl-, ein Cycloalkyl-, ein Alkenyl- oder ein Arylrest mit 1 bis 15 Kohlenstoffatomen ist,
wobei R⁵ eine Alkylgruppe mit 1 bis 10 Kohlenstoffatomen ist,
wobei R⁷ ein Wasserstoff oder ein Substituent mit 1 bis 15 Kohlenstoffatomen ausgewählt aus der Gruppe "linearer Alkylrest, verzweigter Alkylrest, cyclischer Alkylrest, 1°-Amino-Alkylrest, 2°-Amino-Alkylrest, Arylrest, Alkenylrest" ist,
wobei R⁸ ein Wasserstoff oder ein Substituent mit 1 bis 10 Kohlenstoffatomen ausgewählt aus der Gruppe "linearer Alkylrest, verzweigter Alkylrest, cyclischer Alkylrest, 1°-Amino-Alkylrest, 2°-Amino-Alkylrest, Arylrest, Alkenylrest" ist,
wobei R⁹ ein Wasserstoff, ein Alkyl-, ein Cycloalkyl-, ein Alkenyl- oder ein Arylrest mit 1 bis 15 Kohlenstoffatomen ist,
wobei R¹⁰ ein Wasserstoff, ein Alkyl-, ein Cycloalkyl-, ein Alkenyl- oder ein Arylrest mit 1 bis 15 Kohlenstoffatomen ist,
wobei R¹¹ eine Alkylgruppe mit 1 bis 10 Kohlenstoffatomen ist,
wobei a, b, c, f, g, h jeweils eine ganze Zahl zwischen 0 und 3 sind,
wobei d und i jeweils eine ganze Zahl zwischen 0 und 3 sind, und
wobei n größer oder gleich 1 und kleiner oder gleich 6 ist,
wobei das Polymer zumindest eine aus der Gruppe "Polyurethan, Polyester, Polyether, Polyol, Polyisobutylen, Isobutylen-Isopren-Copolymer, Polychloropren, Polyisopren, Styrol-Isopren-Copolymer und/oder deren hydrierte Varianten, Polybutadien, Styrol-Butadien-Copolymer und/oder deren hydrierte Varianten, Isopren-Butadien-Copolymer und/oder deren hydrierte Varianten, Styrol-Isobutylen-Copolymer, Polyamid, Polycarbonat, Alkylharz, Phenolharz, Vinylester, Vinylpolymer, Polyacrylat, Polymethylmethacrylat, Polyvinylalkohol" ausgewählte Komponente aufweist,
wobei das Polymer eine hydrolysierbare Organyl-Oxy-Silylgruppe mit der Formel

   (-X-(CH₂)ₚ-(CR'R")_{z}-(CH₂)_{q}-SiR¹³_{y}(OR¹⁴)_{3-y})

   aufweist,
   wobei R' ein Wasserstoffatom, ein Alkyl-, ein Cycloalkyl, ein Alkenyl- oder ein Arylrest mit 1 bis 15 Kohlenstoffatomen ist,
   wobei R" ein Wasserstoffatom, ein Alkyl-, ein Cycloalkyl-, ein Alkenyl-oder ein Arylrest mit 1 bis 15 Kohlenstoffatomen ist,
   wobei R¹³ ein Alkyl-, ein Cycloalkyl-, ein Alkenyl- oder ein Arylrest mit 1 bis 10 Kohlenstoffatomen ist,
   wobei R¹⁴ ein Alkylrest oder ein Alkoxyalkylrest ist,
   wobei X eine zweibindige Bindegruppe ist, die aus der Gruppen "-O-, -S-, -R²²N-, -O-CO-NR²²-, -NR²²COO-, -NR²²-CONH-, -NHCONR²²-, -NR²²-CONR²²-" ausgewählt ist, wobei R²² ein Wasserstoffatom oder ein zyklischer oder linearer oder verzweigter C₁ bis C₁₈ Alkyl- oder Alkenylrest oder ein C₆ bis C₁₈ Arylrest ist,
   wobei die Summe der Indizes p, q und z zwischen 1 und 6 liegt,
   wobei der Index p eine ganze Zahl zwischen 0 und 3 ist,
   wobei der Index q 0 oder 1 ist,
   wobei der Index z den Wert 1 oder 3 hat,
   und wobei y den Wert 0 oder 1 aufweist.

Vorzugsweise weist die Zusammensetzung zumindest ein Silan C mit der Formel R¹R²N-(CH₂)ₐ-(CR³R⁴)_{b}-(CH₂)_{c}-SiR⁵_{3-d}(OR⁶)_{d} auf. Bevorzugt weist das von dem Silan C verschiedene Silan D die Formel R⁷R⁸N-(CH₂)_{f}-(CR⁹R¹⁰)_{g}-(CH₂)ₕ-SiR¹¹₃₋ᵢ(OR¹²)ᵢ auf.

Es liegt im Rahmen der Erfindung, dass das Silan C eine höhere Reaktivität vorzugsweise gegenüber Wasser und/oder dem Polymer als das Silan D aufweist. Es empfiehlt sich, dass das Silan D eine höhere Reaktivität gegenüber Wasser als das Polymer aufweist. Vorteilhafterweise wird die Reaktivität des Silans C und/oder des Silans D durch das Stickstoffatom bzw. die Polarität des Stickstoffatoms bestimmt. Gemäß einer Ausführungsform weist ein Silan C, bei dem R¹ und R² jeweils Wasserstoffatome sind, eine höhere Reaktivität und bevorzugt ein stärker polarisiertes Stickstoffatom auf als ein Silan D, bei dem R⁷ ein Wasserstoffatom und R⁸ vorzugsweise ein von Wasserstoff verschiedener Substituent ist. In vorteilhafter Weise ist das Silan C ein 1°-Amin und das Silan D ein 2°-Amin, wobei das 1°-Amin eine höhere Reaktivität als das 2°-Amin aufweist. Es liegt im Rahmen der Erfindung, dass die relative Reaktivität des Silans C und des Silans D vorzugsweise praktisch bestimmt wird. Bewährtermaßen wird eine vorgegebene Menge des Silans C bzw. des Silans D mit einer ebenfalls vorgegebenen Menge des Polymers vermischt, woraufhin vorzugsweise eine Hautbildungszeit gemessen wird. Zur Bestimmung der Hautbildungszeit wird ein Gegenstand in vorgegebenen, zeitlichen Abständen (z. B. 1 min) auf die Oberfläche der Zusammensetzung aufgesetzt und angehoben, wobei die Hautbildungszeit die Zeit ist, ab der keine Reste der Zusammensetzung mehr an dem Gegenstand haften bleiben. Je kürzer die Hautbildungszeit ist, desto höher ist die Reaktivität des Silans C bzw. des Silans D.

Es empfiehlt sich, die Reaktivität des Silans C über die zwischen dem Silizium- und dem Stickstoffatom angeordnete Gruppe -(CH₂)ₐ-(CR³R⁴)_{b}-(CH₂)_{c}- zu steuern. Dabei zeichnet sich ein Silan C mit höchster Reaktivität aus, wenn die Summe aus den Indizes a, b und c gleich 1 ist. Ein solches Silan C verfügt vorteilhafterweise über eine höhere Reaktivität als ein Silan D, bei welchem Silan D das Silizium- und das Stickstoffatom über eine -(CH₂)_{f}-(CR⁹R¹⁰)_{g}-(CH₂)ₕ-Gruppe verbunden sind, bei der die Summe aus den Indizes f, g und h zumindest zwei und vorteilhafterweise drei beträgt.

Gemäß einer Ausführungsform werden die relativen Reaktivitäten des Silans C und/oder des Silans D durch die Substituenten R⁵ und/oder R¹¹ bzw. die Indizes (3-d) und/oder (3-i) eingestellt. Es liegt im Rahmen der Erfindung, dass der Substituent R⁵ ein Wasserstoffatom oder ein Alkylrest mit 1 bis 6 Kohlenstoffatomen ist. Vorzugsweise ist der Substituent R¹¹ ein Alkylrest mit 1 bis 6 Kohlenstoffatomen. Besonders bevorzugt ist der Rest R⁵ und/oder der Rest R⁶ eine Methylgruppe oder eine Ethylgruppe.

Vorzugsweise erfolgt die Einstellung der Reaktivitäten des Silans C und des Silans D über die Substituenten R⁶ und/oder R^{6'} und/oder R^{6"} im Silan C und/oder R¹² und/oder R^{12'} und/oder R^{12"} im Silan D. Es ist möglich, dass die Reste R⁶ und R^{6'} und/oder R⁶ bzw. R^{6'} und R^{6"} jeweils voneinander verschieden sind und jeweils empfohlenermaßen verschiedene Alkylreste der Formel -CₙH₂ₙ₊₁ sind. Es liegt im Rahmen der Erfindung, dass die Reaktivität des Silans C höher ist als die des Silans D, wenn der Index d größer oder gleich dem Index i ist und/oder R⁶ ein Alkylrest ist, dessen Kohlenstoffgerüst weniger Kohlenstoffatome aufweist als der den Substituenten R¹² bildende Alkylrest. Die Reaktivität des Silans C ist höher als die des Silans D, wenn die Organyl-Oxy-Gruppe bzw. Alkoxy-Gruppe OR⁶ leichter vom Silizium abspaltbar ist als die Organyl-Oxy-Gruppe OR¹² vom Silizium des Silans D.

Zweckmäßigerweise sind das Silan C und/oder das Silan D ein Trockenmittel, das in vorteilhafter Weise Wasser aus der härtbaren Zusammensetzung bindet bzw. durch Reaktion entfernt. Vorzugsweise sind das Silan C und/oder das Silan D Komponenten mit co-katalytischen Aktivitäten, die das Aushärten der Zusammensetzung, insbesondere des Polymers begünstigen.

Es liegt im Rahmen der Erfindung, dass das Polymer im Wesentlichen aus verzweigten und/oder unverzweigten Hauptketten besteht. Die Zusammensetzung weist empfohlenermaßen einen Polymeranteil von 10 Gew.-% bis 70 Gew-%, vorzugsweise von 15 Gew.-% bis 40 Gew.-% und besonders bevorzugt von 20 Gew.-% bis 30 Gew.-% auf. Das Grundgerüst bzw. die Hauptkette des Polymers ist aus zumindest einem Polymer oder aus einer Mischung von Polymeren gebildet, wobei das Polymer oder die Polymere der Mischung zumindest eine aus der Gruppe "Polyurethan, Polyester, Polyether, Polyol, Polyisobutylen, Isobutylen-Isopren-Copolymer, Polychloropren, Polyisopren, Styrol-Isopren-Copolymer und/oder deren hydrierte Varianten, Polybutadien, Styrol-Butadien-Copolymer und/oder deren hydrierte Varianten, Isopren-Butadien-Copolymer und/oder deren hydrierte Varianten, Styrol-Isobutylen-Copolymer, Polyamid, Polycarbonat, Alkylharz, Phenolharz, Vinylester, Vinylpolymer, Polyacrylat, Polymethylmethacrylat, Polyvinylalkohol" ausgewählte Komponente aufweist. Es ist möglich, dass die Zusammensetzung zwei und gegebenenfalls mehr als zwei Polymere bzw. eine Polymermischung enthält.

Das Polymer weist zumindest eine hydrolysierbare Organyl-Oxy-Silylgruppe mit der Formel "-X-(CH₂)ₚ(CR'R")_{z}-(CH₂)_{q}-Si R¹³_{y}(OR¹⁴)_{3-y}" auf. Es ist möglich, dass die hydrolysierbare Organyl-Oxy-Silylgruppe eine aus der Gruppe "-X-(CH₂)ₚ(CR'R")_{z}-(CH₂)_{q}-Si(OR¹⁴)(OR¹⁵)(OR¹⁶)" oder "-X-(CH₂)ₚ (CR'R")_{z}-(CH₂)_{q}-Si R¹³(OR¹⁴)(OR¹⁵)" ausgewählte Formel aufweist. X ist eine zweibindige Bindegruppe, die ausgewählt ist aus der Gruppe "-O-, -S-, -R²²N-, -O-CO-NR²²-, - NR²²COO-, -NR²²-CONH-, -NHCONR²²-, -NR²²-CONR²²-", wobei R²² ein Wasserstoffatom oder ein cyclischer oder linearer oder verzweigter C₁ bis C₁₈ Alkyl- oder Alkenylrest oder ein C₆ bis C₁₈ Arylrest ist. Der Substituent R' ist ein Wasserstoffatom, ein Alkyl-, ein Cycloalkyl-, ein Alkenyl- oder ein Arylrest mit 1 bis 15 Kohlenstoffatomen. Der Substituent R" ist ein Wasserstoffatom, ein Alkyl-, ein Cycloalkyl-, ein Alkenyl- oder ein Arylrest mit 1 bis 15 Kohlenstoffatomen. Es ist möglich, dass der Alkyl- oder Alkenylrest halogensubstituiert ist. Der Substituent R¹³ ist ein möglicherweise halogensubstituierter Alkyl-, Cycloalkyl-, Alkenyl- oder Arylrest, wobei der Substituent R¹³ 1 bis 10 Kohlenstoffatome aufweist. Der Substituent R¹⁴ ist ein Alkylrest oder ein Alkoxyalkylrest und besonders bevorzugt ein n-Alkoxyalkylrest mit empfohlenermaßen 1 bis 6 Kohlenstoffatomen. Gemäß einer vorteilhaften Ausführungsform ist der Substituent R¹⁵ und/oder R¹⁶ vorzugsweise jeweils ein Alkylrest oder ein Alkoxyalkylrest und besonders bevorzugt ein n-Alkoxyalkylrest mit empfohlenermaßen 1 bis 6 Kohlenstoffatomen. Gemäß einer Ausführungsform ist der Substituent R¹⁵ und/oder R¹⁶ jeweils eine Ethergruppe, vorzugsweise eine Polyethergruppe. Gemäß einer vorteilhaften Ausführungsform ist der Substituent R¹⁴ und/ oder R¹⁵ und/oder R¹⁶ jeweils ein Alkoxy-Alkylrest, bei dem die Alkoxy-Gruppe ein bis fünf Kohlenstoffatome und zweckmäßigerweise ein bis drei Kohlenstoffatome aufweist. Besonders bevorzugt ist die Alkoxy-Gruppe eine Methoxy-Gruppe oder eine Ethoxy-Gruppe. In vorteilhafter Weise weist der mit der Alkoxy-Gruppe substituierte Alkylrest der Alkoxy-Alkyl-Gruppe ein bis 8 Kohlenstoffatome und vorzugsweise ein bis vier Kohlenstoffatome auf. Besonders bevorzugt weist der Alkylrest neben der Alkoxy-Gruppe lediglich ein weiteres Kohlenstoffatom und zwei Wasserstoffatome auf. Es ist möglich, dass R¹⁴ und/oder R¹⁵ und/oder R¹⁶ jeweils ein linearer oder cyclischer oder verzweigter Alkenylrest mit empfohlenermaßen 2 bis 10 Kohlenstoffatomen oder gemäß einer Ausführungsform ein ω-Oxaalkyl-Alkylrest mit bevorzugt 2 bis 10 Kohlenstoffatomen ist. y weist den Wert 0 oder 1 auf. Der Index p ist eine ganze Zahl zwischen 0 und 3, vorzugsweise 0 oder 1. Es ist möglich, dass die Substituenten R¹⁴ und R¹⁵ und gegebenenfalls R¹⁶ gleich oder verschieden sind. Der Index q nimmt den Wert 0 oder 1 an. Der Wert z beträgt 1 oder 3. Die Summe der Indizes p, z und q liegt zwischen 1 und 6. Besonders bevorzugt ist die Summe der Indizes p, z, und q 1 oder 3. Vorzugsweise weist die Zusammensetzung eine Polymermischung aus zumindest zwei verschiedenen Polymeren auf, wobei der Anteil des die Organyl-Oxy-Silylgruppen tragenden Polymers 10 Gew.-% bis 70 Gew.-%, bevorzugt 15 Gew.-% bis 50 Gew.-% und besonders bevorzugt 20 Gew.-% bis 40 Gew.-% der Polymermischung beträgt.

Gemäß einer bevorzugten Ausführungsform ist der Substituent R¹ ein Wasserstoffatom oder ein Substituent mit einer 1°-Aminfunktionalität und/oder ist der Substituent R² ein Wasserstoffatom oder ein Substituent mit einer 1°-Aminfunktionalität. Es empfiehlt sich, dass der Rest R¹ ein aliphatischer oder cycloaliphatischer oder aromatischer oder arylischer Rest ist. Vorteilhafterweise weist der Substituent R¹ 1 bis 6 Kohlenstoffatome auf. Es liegt im Rahmen der Erfindung dass der Substituent R¹ neben einer 1°-Aminfunktion zumindest eine weitere 2°-Aminfunktion aufweist. Gemäß einer Ausführungsform ist der Substituent R¹ und/oder der Substituent R² eine cyclische aliphatische oder aromatische Gruppe, die vorzugsweise ein Stickstoff-Heteroatom enthält. Grundsätzlich ist es möglich, dass der Substituent R¹ und der Substituent R² unter Ausbildung eines Stickstoff-Heterocyclusses miteinander verbunden sind. Vorteilhafterweise weist ein von dem Substituent R¹ und R² gebildeter StickstoffHeterocyclus als Substituent zumindest eine primäre Aminfunktion auf. Gemäß einer bevorzugten Ausführungsform weist der Substituent R¹ und/oder Substituent R² eine primäre Aminfunktion auf, die über zumindest eine Alkylenamineinheit an den Stickstoff des Silans C gekoppelt ist. Die Alkylenamineinheit weist vorzugsweise 1 bis 6 und besonders bevorzugt zwei oder drei Kohlenstoffatome auf Vorzugsweise weist das Silan D eine 2°-Aminfunktion auf, wobei der Rest R⁷ vorzugsweise ein Wasserstoffatom und der Rest R⁸ jeweils bevorzugt ein aliphatischer, cycloaliphatischer, aromatischer oder arylischer Substituent ist. Gemäß einer Ausführungsform weist der Substituent R⁸ 1 bis 6 Kohlenstoffatome auf. Grundsätzlich ist es möglich, dass der Substituent R⁸ eine 2°-Aminfunktion und/oder eine vorzugsweise terminale 1°-Aminfunktion aufweist. Gemäß einer möglichen Ausführungsform beinhaltet der Rest R⁷ und/oder R⁸ eine cyclische Alkylgruppe oder aromatische Gruppe mit vorzugsweise zumindest einem Stickstoff-Heteroatom. Bevorzugt ist an die cyclische Alkyl- bzw. aromatische, das Heteroatom enthaltende Gruppe eine primäre oder sekundäre Aminfunktion angebunden. Empfohlenermaßen weist der Rest R⁷ und/oder R⁸ eine Aminfunktion auf, die über bevorzugt zumindest eine Alkylenamin-Gruppe an den Stickstoff des Silans D angeschlossen ist. Vorzugsweise weist die Alkylenamin-Gruppe 1 bis 6 und bevorzugt 2 oder 3 Kohlenstoffatome auf. Zweckmäßigerweise sind die Reste R⁷ und R⁸ über vorzugsweise eine ein Stickstoffatom enthaltende aliphatische und/oder arylische Gruppe mit bevorzugt 1 bis 6 Kohlenstoffatomen miteinander verbunden.

Es ist möglich, dass die funktionelle Gruppe R³ bzw. R⁴ des Silans C und/oder die funktionelle Gruppe R⁹ bzw. R¹⁰ des Silans D jeweils ein Wasserstoffatom und vorzugsweise jeweils ein Alkylrest mit 1 bis 10 Kohlenstoffatomen ist. Gemäß einer Ausführungsform ist die Gruppe R³ ein Wasserstoffatom und R⁴ ein Alkylrest mit 1 bis 6 Kohlenstoffatomen. Empfohlenermaßen ist der Substituent R⁹ ein Wasserstoffatom und der Rest R¹⁰ ein Alkylrest mit vorzugsweise 1 bis 6 Kohlenstoffatomen. Zweckmäßigerweise ist der Rest R⁹ und/oder R¹⁰ eine Methylgruppe. Es ist möglich, dass die funktionellen Gruppen R³ und R⁹ bzw. R⁴ und R¹⁰ identisch sind.

Empfohlenermaßen ist der Wert des Index d des Silans C größer als der Wert des Index i des Silans D. Gemäß einer vorteilhaften Ausführungsform beträgt der Wert des Index d 2 oder 3 und besonders bevorzugt 3. Es liegt im Rahmen der Erfindung, dass der Wert des Index i bevorzugt 1 bis 3 und gemäß einer vorteilhaften Ausführungsform 2 beträgt. Besonders bevorzugt beträgt der Wert des Index d 3 und der Wert des Index i 2.

Es hat sich bewährt, dass die Summe der Indizes a, b und c zumindest 1 und höchstens 6 ist und/oder dass die Summe der Indizes f, g und h zumindest 1 und höchstens 6 ist. Grundsätzlich ist es möglich, dass die Summe der Indizes a, b und c bzw. f, g und h größer als 6, beispielsweise 8 oder 9 ist. Vorteilhafterweise ist die Summe der Indizes a, b und c kleiner als die Summe der Indizes f, g und h. Es liegt im Rahmen der Erfindung, dass Silane, bei denen die Summe der Indizes a, b und c bzw. f, g und h jeweils 1 beträgt, als α-Silane bezeichnet werden. Silane, bei denen die Summe der Indizes a, b und c bzw. f, g und h 3 beträgt, werden im Rahmen der Erfindung als γ-Silane bezeichnet. Gemäß einer Ausführungsform sind das Silan C und das Silan D α-Silane, wobei das Silan C ein primäres Amin und das Silan D ein sekundäres Amin ist. Es ist möglich, dass das Silan C und das Silan D jeweils γ-Silane sind, wobei das Silan C drei Ethoxysubstituenten (d=3, R⁶=C₂H₅) oder zwei Methoxysubstituenten, (d = 2, R⁶=CH₃) aufweist und das Silan D zwei Ethoxygruppen (i = 2, R¹²=C₂H₅), aufweist. Gemäß einer besonders bevorzugten Ausführungsform ist das Silan C ein α-Silan und das Silan D ist ein γ-Silan.

Vorzugsweise ist der Index i des Silans D kleiner als 3, wenn das Silan C und das Silan D jeweils ein γ-Silan sind. Vorteilhafterweise ist der Substituent R¹² des Silans D eine Methyl- oder eine Ethylgruppe.

Empfohlenermaßen enthält die Zusammensetzung 0,1 Gew.-% bis 3 Gew.-% des Silans C und 0,1 Gew.-% bis 5 Gew.-% des Silans D. Zweckmäßigerweise sind in der Zusammensetzung 0,25 Gew.-% bis 1,5 Gew.-% und bevorzugt 0,5 bis 1,0 Gew.-% des Silans C enthalten Vorzugsweise weist die Zusammensetzung 0,25 Gew.-% bis 3,0 Gew.-% und bevorzugt 0,5 Gew.-% bis 2,0 Gew.-% des Silans D auf. Vorzugsweise sind das Silan C und das Silan D zusammen mit zumindest 0,8 Gew.-%, bevorzugt mit zumindest 1,1 Gew.-% und in einer möglichen Ausführungsform mit zumindest 1,6 Gew.-% in der Zusammensetzung enthalten. Das Silan C und das Silan D sind bevorzugt zusammen mit 1,1 Gew.-% bis 2,0 Gew-% und besonders bevorzugt mit 1,2 Gew.-% bis 1,8 Gew.-% in der Zusammensetzung enthalten.

Erfingungsgemäß weist die Zusammensetzung einen Wassergehalt von 400 ppm bis 1000 ppm auf Vorteilhafterweise enthält die Zusammensetzung 750 ppm bis 1000 ppm Wasser und empfohlenermaßen 800 ppm bis 950 ppm Wasser. Es empfiehlt sich, dass die Zusammensetzung zumindest ein Trocknungsmittel aufweist. Das Trocknungsmittel wird im Rahmen der Erfindung auch als Wasserfänger bezeichnet. Es empfiehlt sich, dass als Trocknungsmittel zumindest ein organofunktionelles Silan und/oder ein Alkylorthoformiat und/oder ein Alkylorthoacetat eingesetzt wird. In einer bevorzugten Ausführungsform ist das Trocknungsmittel ein Vinylsilan. Als Wasserfänger kann beispielsweise zumindest eine Verbindung eingesetzt werden, die aus der Gruppe "Vinyltrimethoxysilan, Vinylmethyldimethoxysilan, Methyltrimethoxysilan, Propyltrimethoxysilan, Tetraethoxysilan, O-Methylcarbamotomethylmethyldimethoxysilan, O-Methylcarbamatomethyltrimethoxysilan, O-Ethylcarbamatomethylmethyldiethoxysilan, O-Ethylcarbamatomethyltrimethoxysilan" ausgewählt ist. Vorteilhafterweise weist die Zusammensetzung 0,1 Gew.-% bis 10 Gew.-% vorzugsweise 0,5 Gew.-% bis 2,0 Gew.-% des Wasserfängers auf. Durch den Wasserfänger wird die Zusammensetzung zweckmäßigerweise insbesondere während der Lagerung gegenüber eindringender Feuchtigkeit stabilisiert. Vorteilhafterweise fängt das Trocknungsmittel Wasser ab, das während des Herstellungsprozesses in die härtbare Zusammensetzung eingetragen wird.

Gemäß einer Ausführungsform weist die Zusammensetzung zumindest einen Zusatzstoff, insbesondere zumindest einen Haftvermittler auf. Zweckmäßigerweise enthält der Haftvermittler zumindest ein Alkoxysilan und/oder ein Aminosilan, welches Alkoxysilan und/oder Aminosilan zumindest eine und vorzugsweise mehrere funktionellen Gruppen bzw. Substituenten trägt. Die funktionelle Gruppe ist dabei zumindest ein Substituent, der aus der Gruppe "Aminogruppe, Mercaptogruppe, Epoxygruppe, Carboxylgruppe, Isocyanatogruppe, Isocyanuratgruppe, Halogen" ausgewählt ist. Gemäß einer Ausführungsform beinhaltet der Haftvermittler zumindest ein aminofunktionelles Alkoxysilan bzw. ein Aminoalkylalkoxysilan. Beispielesweise enthält der Haftvermittler zumindest eine Verbindung aus Gruppe "γ-Mercaptopropyltrimethoxysilan, γ-Mercaptopropyltriethoxysilan, γ-Mercaptopropylmethyldimethoxysilan, γ-Glycidoxypropyltrimethoxysilan, γ-Glycidoxypropyltriethoxysilan, γ-Glycidoxypropylmethyldimethoxysilan, β-Carboxyethyltriethoxysilan, β-Carboxyethylphenylbis(2-methoxyethoxy) silan, N-β-(Carboxymethyl)aminoethyl-γ-aminopropyltrimethoxysilan, Vinyltrimethoxysilan, Vinyltriethoxysilan, γ-Acroyloxypropylmethyltriethoxysilan, γ-Isocyanatopropyltrimethoxysilan, γ-Isocyanatopropyltriethoxysilan, γ-Isocyanatopropylmethyldiethoxysilan, γ-Isocyanatopropylmethyldimethoxysilan, Tris(tri-methoxysilyl)isocyanurat, γ-Chloropropyltrimethoxysilan, γ-Aminopropyltrimethoxysilan, γ-Aminopropyltriethoxysilan, γ-Aminopropyltriisopropoxysilan, γ-Aminopropylmethyldimethoxysilan, γ-Aminopropylmethyldiethoxysilan, γ-(2-Aminoethyl)-3-aminopropyltrimethoxysilan, γ-(2-Aminoethyl)amino-propylmethyldi-methoxysilan, γ-(2-Aminoethyl)aminopropyltriethoxysilan, γ-(2-Aminoethyl) aminopropylmethyldiethoxysilan, γ-(2-Aminoethyl)aminopropyltriiso-propoxy-silan, N-Phenyl-γ-aminopropyltrimethoxysilan, N-Benzyl-γ-amino-propyltrimethoxysilan, N-Vinylbenzyl-γ-aminopropyltriethoxysilan". Gemäß einer Ausführungsform enthält der Haftvermittler zumindest ein oligomeres Aminosilan, beispielsweise ein aminoalkylgruppenmodifiziertes Alkylpolysiloxan und/oder ein oligomeres Derivat eines aminoalkylgruppenmodifizierten Alkylpolysiloxans. Es ist möglich, dass das aminoalkylgruppenmodifizierte Alkylpolysiloxan zumindest teilweise hydrolysiert ist.

Die Zusammensetzung enthält gemäß einer bevorzugten Ausführungsform zumindest einen zweckmäßigerweise gemahlenen Füllstoff. Beispielsweise weist der Füllstoff vorzugsweise zumindest einen Mineralstoff, beispielsweise ein Metalloxid, und/oder ein Metallpulver auf. Als Füllstoff beinhaltet die Zusammensetzung zumindest eine Komponente ausgewählt aus der Gruppe "Calciumcarbonat in Form von natürlicher, gemahlener Kreide, gemahlene und beschichtete Kreide, gefällte Kreide, gefällte und beschichtete Kreide, Bariumsulfat, Tonmineral, Bentonit, Kaolin, Talkum, Titandioxid, Aluminiumoxid, Aluminiumtrihydrat, Magnesiumoxid, Magnesiumhydroxid, gefällte pyrogene Kieselsäuren, pyrogene Kieselsäuren, Calciumsilikat, Zirkoniumsilikat, Siliciumnitrid, Siliciumcarbid, Bornitrid, Ton, Tonerde, Eisenoxid, Zinkoxid, Titanoxid, Sand, Quarz, Diatomeenerde, Flint, Glimmer, Glaspulver". Es ist möglich, dass als Füllstoff zumindest ein organischer Füllstoff eingesetzt wird. Der organische Füllstoff enthält vorzugsweise zumindest eine Komponente aus der Gruppe "Ruß, Graphit, Carbon Nanotubes (CNT), Holzfasern, Holzmehl, Sägespäne, Zellstoff, Baumwolle, Hackschnitzel, Häcksel, Spreu, gemahlene Walnussschalen". Vorteilhafterweise weist der Füllstoff Kurzfasern auf, welche Kurzfasern zumindest eine Faserart aus der Gruppe "Glasfaser, Glasfilament, Polyacrylnitrilfaser, Kohlefaser, Kevlarfaser, Polyethylenfasern" umfassen.

Es ist möglich, dass als Füllstoff Hohlkugeln mit einer mineralischen Hülle und/oder einer Kunststoffhülle eingesetzt werden. Diese Hohlkugeln können beispielsweise Glashohlkugeln und/oder Hohlkugeln auf Kunststoffbasis sein. Die Hohlkugeln sind aus anorganischen und/oder organischen Stoffen zusammengesetzt. Die Hohlkugeln weisen im Rahmen der Erfindung einen Durchmesser von bis zu 1 mm und bevorzugt von weniger als 500 µm auf. Die Zusammensetzung umfasst bzw. beinhaltet empfohlenermaßen 10 Gew.-% bis 70 Gew.-% und zweckmäßigerweise 30 Gew.-% bis 60 Gew.-% des Füllstoffs.

Die Zusammensetzung enthält gemäß einer Ausführungsform zumindest einen Weichmacher. Beispielsweise ist der Weichmacher ein Phthalatester und/oder Adipinsäureester. Gemäß einer Ausführungsform ist der Weichmacher zumindest eine aus der Gruppe "Dioctylphthalat, Diisooctylphthalat, Diundecylphthalat, hydrierter Phthalatester, Dioctyladipat, Benzoesäureester, Glycolester, Phosphorsäureester, Sulfonsäureester, Zitronensäureester, Trimellithsäurester, Sebacinsäureester, Propionsäureester, Polyester, Polyether, Polystyrol, Polybutadien, Polyisobuten, paraffinischer Kohlenwasserstoff" ausgewählte Komponente. Es ist möglich, dass als Weichmacher höhere, verzweigte Kohlenwasserstoffe eingesetzt werden. Empfohlenermaßen können reaktive Weichmacher (Reaktivverdünner), wie beispielsweise Polyether, in der Zusammensetzung enthalten sein. Vorzugsweise tragen die Reaktivverdünner mindestens eine Alkoxysilylgruppe. Die Zusammensetzung beinhaltet bevorzugt bis zu 40 Gew.-% Weichmacher und/oder Reaktivverdünner.

Vorteilhafterweise enthält die Zusammensetzung bis zu 25 Gew.-% zumindest eines Tackifiers. Unter Tackifier wird eine Substanz verstanden, welche die Haftungseigenschaften von Klebschichten bzw. der Zusammensetzung auf Oberflächen verbessert. Als Tackifier geeignet sind beispielsweise Harze, Terpen-Oligomere, Cumaron-/Inden-Harze aliphatische petrochemische Harze und/ oder modifizierte Phenolharze. Vorzugsweise ist der Tackifier ein Kohlenwasserstoffharz, das bevorzugt durch Polymerisation von Terpenen, insbesondere α- oder β-Pinen und/oder Dipenten und/oder Limonen gewonnen wird. Zu den Terpenharzen werden beispielsweise Copolymere aus Terpenen und anderen Monomeren, insbesondere Styrol, α-Methylstyrol, Isopren und dergleichen, gerechnet. Ebenfalls geeignet sind Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls geeignet sind die Kolophoniumharze und deren Derivate, beipielsweise deren Ester und Alkohole.

Gemäß einer Ausführungsform enthält die Zusammensetzung zumindest ein Thixotropiermittel. Beispielsweise ist das Thixotropiermittel zumindest eine aus der Gruppe "hydrophile pyrogene Kieselsäure, beschichtete pyrogene Kieselsäure, gefällte Kieselsäure, Kieselgel, Kohle, Ruß, Polyamidwachs, Fettsäureamid, hydriertes Ricinusöl, gefällte Kreide" ausgewählte Komponente. Es ist möglich, dass das Thixotropiermittel zumindest ein Harnstoffderivat bzw. ein Polyharnstoffderivat enthält. Gemäß einer Ausführungsform ist das Thixotropiermittel ein quellbarer Kunststoff, beispielsweise ein PVC und/oder ein Stearatsalz und/oder gefällte Kreide. Mit dem Thixotropiermittel ist gemäß einer Ausführungsform die Einstellung der Fließeigenschaften der Zusammensetzung möglich. Die Zusammensetzung weist bevorzugt 1 Gew.-% bis 10 Gew.-%, besonders bevorzugt 1 Gew.-% bis 5 Gew.-% des Thixotropiermittels auf.

Die Zusammensetzung enthält empfohlenermaßen zumindest einen Kondensationskatalysator, beispielsweise einen metallhaltigen Kondensationskatalysator und/oder einen basischen Kondensationskatalysator. Zweckmäßigerweise ist der metallhaltige Kondensationskatalysator ein Zirkonester und/oder ein Aluminumester und/oder ein Titanatester. Vorteilhafterweise ist der Kondensationskatalysator eine Zinnverbindung, vorzugsweise eine Dioctylzinnverbindung. Als metallhaltiger Kondensationskatalysator kann zumindest eine Komponente ausgewählt aus der Gruppe "Tetrabutyltitanat, Tetrapropyltitanat, Tetraisopropyltitanat, Tetraacetylacetonattitanat, Calciumcarboxylat, Vanadiumcarboxylat, Eisencarboxylat, Titancarboxylat, Zirkoniumcarboxylat, Dibutylzinndilaurat, Dibutylzinnmaleat, Dibutylzinndiacetat, Dibutylzinndioctanoat, Dibutylzinnacetylacetonat, Dibutylzinnoxid" eingesetzt werden.

Der basische Kondensationskatalysator ist gemäß einer Ausführungsform mit dem Silan C und/oder dem Silan D identisch. Es ist möglich, dass zumindest ein saurer Kondensationskatalysator (saurer Katalysator), empfohlenermaßen eine organische Säure und/oder eine Mineralsäure, eingesetzt ist, welcher saure Katalysator vorzugsweise aus der Gruppe "Phosphorsäure, Phosphorsäureester, Toluolsulfonsäuren, Borhalogenid" ausgewählt ist. Als Kondensationskatalysator können auch Mischungen mehrerer Katalysatoren aus einer oder mehreren der erwähnten Gruppen eingesetzt werden.

Bevorzugt enthält die Zusammensetzung 0,01 Gew.-% bis 10 Gew.-% und besonders bevorzugt 0,1 Gew.-% bis 2 Gew.-% des Kondensationskatalysators. Die verschiedenen Kondensationskatalysatoren können sowohl in reiner Form als auch als Mischungen verwendet werden. Grundsätzlich ist es möglich, dass die Zusammensetzung kondensationskatalysatorfrei ausgebildet ist.

Es empfiehlt sich, dass die Zusammensetzung ein Einkomponentensystem oder ein Zweikomponentensystem ist. Vorzugsweise enthält eine erste Komponente des Zweikomponentensystems das zumindest eine Polymer. Besonders bevorzugt ist die erste Komponente kondensationskatalysatorfrei ausgebildet. Die zweite Komponente beinhaltet zweckmäßigerweise den zumindest einen Kondensationskatalysator. Vorteilhafterweise ist die zweite Komponente polymerfrei ausgebildet.

Gemäß einer Ausführungsform enthält die Zusammensetzung bis zu 7 Gew.-% und vorzugsweise bis zu 5 Gew.-% Antioxidantien. Es empfiehlt sich, dass die Zusammensetzung bis zu 2 Gew.-%, vorzugsweise bis zu 1 Gew.-% zumindest eines UV-Stabilisators enthält. Als UV-Stabilisator besonders geeignet ist eine Komponente, die aus der Gruppe "Hindered Amine Light Stabilizer (HALS), Benzotriazol, Benzophenon, Benzoat, Cyanacrylat, Acrylat, sterisch gehindertes Phenol, Phosphor, Schwefel" ausgewählt ist. Der UV-Stabilisator kann beispielsweise eine Silylgruppe tragen und beim Vernetzen bzw. Aushärten in das Endprodukt über vorzugsweise chemische Bindungen zu dem Polymer und/oder Silan C und/oder Silan D eingebaut werden.

Die Zusammensetzung kann zumindest einen Zusatzstoff aus der Gruppe "Biozid, Fungizid, Farbstoff, Riechstoff, Flammschutzmittel, Pigment, zellenerzeugendes Mittel, organisches Lösungsmittel" enthalten.

Gemäß einer bevorzugten Ausführungsform enthält die Zusammensetzung ein Silan B mit der Formel R¹⁷ᵤ(CR¹⁸R¹⁹)ₜSiR²⁰_{w}(OR²¹)_{4-u-t-w}, wobei R¹⁷ ein C₆ bis C₁₈-Arylrest ist, wobei R¹⁸ ein Wasserstoffatom oder ein Halogenatom oder ein Pseudohalogen ist, wobei R¹⁹ ein Wasserstoffatom oder ein Halogenatom oder ein Pseudohalogen ist, wobei R²⁰ ein Alkyl- oder Cycloalkyl- oder Alkenyl- oder Arylrest mit vorzugsweise 1 bis 10 Kohlenstoffatomen ist, wobei R²¹ ein Alkylrest mit 1 bis 10 Kohlenstoffatomen ist, wobei u, t, w jeweils eine ganze Zahl zwischen 0 und 3 sind. Durch die Zugabe des Silans B ist eine Einflussnahme auf die mechanischen Eigenschaften möglich, ohne dass eine Veränderung des durch die Silane C und D katalysierten Aushärtens der Zusammensetzung erfolgt. Vorteilhafterweise enthält die Zusammensetzung 0 Gew.-% bis 10 Gew.-%, vorteilhafterweise 0,25 Gew.-% bis 3 Gew.-% und besonders bevorzugt 0,5 Gew.-% bis 1,5 Gew.-% des Silans B. Gemäß einer Ausführungsform ist der Substituent R¹⁷ des Silans B ein Wasserstoff, ein möglicherweise halogensubstituierter cyclischer oder linearer oder verzweigter C₄ bis C₁₈-Alkylrest oder ein Alkenylrest. Gemäß einer Ausführungsform ist der Substituent R¹⁷ ein C₆ bis C₁₈-Arylrest, der zumindest eine Einheit aus der Gruppe "-O-, -S-, -O-CO-O-, -CO" aufweist. Es liegt im Rahmen der Erfindung dass der Rest R²⁰ ein Alkyl- oder Cycloalkyl- oder Alkenyl- oder Arylrest mit vorzugsweise 1 bis 10 Kohlenstoffatomen ist. Es ist möglich dass der Substituent R²⁰ halogensubstituiert ist. Vorteilhafterweise ist der Substituent R²¹ ein Alkylrest mit 1 bis 6 Kohlenstoffatomen, ein linearer oder cyclischer oder verzweigter Alkenylrest mit 2 bis 10 Kohlenstoffatomen oder ein ω-Oxaalkyl-Alkylrest mit vorteilhafterweise 2 bis 10 Kohlenstoffatomen. Es liegt im Rahmen der Erfindung dass die Indizes u und w jeweils den Wert 0,1 oder 2 und der Index t den Wert 0 oder 1 annimmt.

Zur Lösung des technischen Problems lehrt die Erfindung darüber hinaus die Verwendung einer härtbaren Zusammensetzung nach einem der Ansprüche 1 bis 12, als vorzugsweise elastischen Klebstoff und/oder Dichtstoff. Vorteilhafterweise ist die erfindungsgemäße Zusammensetzung als bevorzugt harter oder weicher Schaum oder als Fugendichtstoff oder als Oberflächenbeschichtung einsetzbar. Grundsätzlich ist es möglich, die Zusammensetzung zur Herstellung von Abformmassen und Formteilen einzusetzen. Die Zusammensetzung lässt sich beispielsweise durch Sprühen, Gießen, Pressen, Spachteln oder Ausspritzen applizieren.

Zur Herstellung einer erfindungsgemäßen härtbaren Zusammensetzung nach einem der Ansprüche 1 bis 11 ist vorgesehen, die Zusammensetzung mit der Maßgabe zu trocknen, dass die Zusammensetzung einen Restwassergehalt zwischen 400 ppm und 1000 ppm aufweist. Die Trocknung erfolgt dabei zweckmäßigerweise unter Druckverminderung und bevorzugt durch Erwärmen auf Temperaturen von bis zu 110 °C und besonders bevorzugt von 80 °C bis 110 °C. Es ist möglich, die Trocknung bei Temperaturen von weniger als 50 °C durchzuführen, wobei vorteilhafterweise zur Vereinfachung des Abdampfens des in der Zusammensetzung enthaltenen Wassers der Druck der die Zusammensetzung umgebenden Atmosphäre vermindert wird. Das Austreiben des Wassers kann durch ein Strippgas begünstigt werden. Ergänzend bzw. alternativ können der Zusammensetzung Wasserfänger (Trocknungsmittel) zugesetzt werden, die auf chemischem Wege durch Reaktion mit dem in der Zusammensetzung enthaltenen Wasser der Zusammensetzung das Wasser entziehen. Empfohlenermaßen wird zur Herstellung der härtbaren Zusammensetzung das Polymer mit dem Silan C und dem Silan D vermischt. Zweckmäßigerweise erfolgt nach der Vermischung des Polymers mit dem Silan C und dem Silan D das Hinzufügen des zumimdest einen Füllstoffs. Gemäß einer Ausführungsform wird der Feuchtigkeitsgehalt der härtbaren Zusammensetzung empfohlenermaßen nach dem Hinzufügen des Füllstoffs bestimmt, wobei besonders bevorzugt unter Berücksichtigung des Wassergehalts bzw. der Feuchtigkeit der Zusammensetzung der Wasserfänger mit der Maßgabe hinzugefügt wird, dass ein Feuchtigkeitsgehalt der härtbaren Zusammensetzung eingestellt wird, welcher Feuchtigkeitsgehalt zwischen 400 ppm und 1000 ppm beträgt.

Die erfindungsgemäße Zusammensetzung zeichnet sich durch hervorragende, mechanische Eigenschaften und eine präzise einstellbare Härtung aus. Dabei ist insbesondere auf den niedrigen Elastizitätsmodul bzw. auf die niedrigen Dehn- und Spannungswerte hinzuweisen, wodurch die angrenzenden Bauteile und die Haftflächen nur gering belastet werden. Der Dehn-Spannungs-Wert, die Zugfestigkeit und die Reißdehnung sind beispielsweise nach DIN 53504 bestimmbar. Die Elastizität (Rückstellvermögen) ist in Anlehnung an ISO 7389 messbar. In vorteilhafter Weise zeichnet sich die erfindungsgemäße Zusammensetzung durch ein hervorragendes Haftungsvermögen auf verschiedenen Untergründen aus. Eine erfindungsgemäße Zusammensetzung ist beispielsweise von Glas, Holz, Beton, Aluminium oder PVC nicht rückstandsfrei ablösbar. Weiterhin liegt der Erfindung die Erkenntnis zugrunde, dass sich die erfindungsgemäße Zusammensetzung durch eine unkritische Lagerbarkeit und eine lagerungsunabhängige, problemlose Verarbeitbarkeit auszeichnet. Die für die Verarbeitbarkeit kritische Viskosität einer erfindungsgemäßen Zusammensetzung verändert sich auch nach langer Lagerzeit selbst bei erhöhten Temperaturen nicht bzw. nur unwesentlich, so dass stets eine zuverlässige Verarbeitbarkeit einer erfindungsgemäßen Zusammensetzung sichergestellt ist. Überraschenderweise wird die lange Lagerbarkeit in Verbindung mit der weiterhin sichergestellten Verarbeitbarkeit durch den hohen Anteil insbesondere der Silane C und D in der Zusammensetzung ermöglicht. Nicht zu erwarten war weiterhin, dass durch den hohen Anteil des Silans C und D in der Zusammensetzung die mechanischen Eigenschaften eine weitere Verbesserung erfahren.

## Patentansprüche

1. Härtbare Zusammensetzung auf Basis zumindest eines Polymers, welches Polymer zumindest eine hydrolysierbare Organyl-Oxy-Silylgruppe aufweist,
wobei die Zusammensetzung zumindest ein Silan C mit einer aus der Gruppe "R¹R²N-(CH₂)ₐ-(CR³R⁴)_{b}-(CH₂)_{c}-SiR⁵_{3-d}(OR⁶)_{d}, R¹R²N-(CH₂)ₐ-(CR³R⁴)_{b}-(CH₂)_{c}-SiR⁵(OR⁶)(OR^{6'}), R¹R²N-(CH₂)ₐ-(CR³R⁴)_{b}-(CH₂)_{c}-Si(OR⁶)(OR^{6'})(OR^{6"})" ausgewählten Formel aufweist,
wobei der Substituent R⁶ und/oder R^{6'}und/oder R^{6"} des Silans C jeweils aus der Gruppe "Alkylrest der Formel -CₙH₂ₙ₊₁, Alkoxyalkylrest mit der Formel -CₙH₂ₙ-O-CₙH₂ₙ₊₁, Alkoxyalkylrest mit der Formel -CₙH₂ₙ-O-Cₙ₊₁H₂ₙ₊₃" ausgewählt ist,
**dadurch gekennzeichnet,**
**dass** die Zusammensetzung einen Wassergehalt von 400 ppm bis 1000 ppm aufweist,
**dass** die Zusammensetzung zumindest ein von dem Silan C verschiedenes Silan D mit einer aus der Gruppe
"R⁷R⁸N-(CH₂)_{f}-(CR⁹R¹⁰)_{g}-(CH₂)ₕ-SiR¹¹₃₋ᵢ(OR¹²)ᵢ, R⁷R⁸N-(CH₂)_{f}-(CR⁹R¹⁰)_{g}-(CH₂)ₕ-SiR¹¹(OR¹²)(OR^{12'}), R⁷R⁸N-(CH₂)_{f}-(CR⁹R¹⁰)_{g}-(CH₂)ₕ-Si(OR¹²)(OR^{12'})(OR^{12"})" ausgewählten Formel aufweist,
**dass** das Silan C ein primäres (1°) und das Silan D ein sekundäres (2°) oder tertiäres (3°) Amin ist
und/oder
**dass** der Index d größer oder gleich dem Index i ist
oder dass der Substituent R¹² und/oder R¹²' und/oder R^{12"} des Silans D jeweils aus der Gruppe "Alkylrest der Formel -Cₙ₊₁H₂ₙ₊₃, Alkoxyalkylrest mit der Formel -Cₙ₊₁H₂ₙ₊₂-O-CₙH₂ₙ₊₁, Alkoxyalkylrest mit der Formel -Cₙ₊₁H₂ₙ₊₂-O-Cₙ₊₁H₂ₙ₊₃, Alkoxyalkylrest mit der Formel -CₙH₂ₙ-O-Cₙ₊₂H₂ₙ₊₅" ausgewählt ist,
wobei R¹ ein Wasserstoff oder ein Substituent mit 1 bis 15 Kohlenstoffatomen ausgewählt aus der Gruppe "linearer Alkylrest, verzweigter Alkylrest, cyclischer Alkylrest, 1°-Amino-Alkylrest, 2°-Amino-Alkylrest, Arylrest, Alkenylrest" ist,
wobei R² ein Wasserstoff oder ein Substituent mit 1 bis 10 Kohlenstoffatomen ausgewählt aus der Gruppe "linearer Alkylrest, verzweigter Alkylrest, cyclischer Alkylrest, 1°-Amino-Alkylrest, 2°-Amino-Alkylrest, Arylrest, Alkenylrest" ist,
wobei R³ ein Wasserstoff, ein Alkyl-, ein Cycloalkyl-, ein Alkenyl- oder ein Arylrest mit 1 bis 15 Kohlenstoffatomen ist,
wobei R⁴ ein Wasserstoff, ein Alkyl-, ein Cycloalkyl-, ein Alkenyl- oder ein Arylrest mit 1 bis 15 Kohlenstoffatomen ist,
wobei R⁵ eine Alkylgruppe mit 1 bis 10 Kohlenstoffatomen ist,
wobei R⁷ ein Wasserstoff oder ein Substituent mit 1 bis 15 Kohlenstoffatomen ausgewählt aus der Gruppe "linearer Alkylrest, verzweigter Alkylrest, cyclischer Alkylrest, 1°-Amino-Alkylrest, 2°-Amino-Alkylrest, Arylrest, Alkenylrest" ist,
wobei R⁸ ein Wasserstoff oder ein Substituent mit 1 bis 10 Kohlenstoffatomen ausgewählt aus der Gruppe "linearer Alkylrest, verzweigter Alkylrest, cyclischer Alkylrest, 1°-Amino-Alkylrest, 2°-Amino-Alkylrest, Arylrest, Alkenylrest" ist,
wobei R⁹ ein Wasserstoff, ein Alkyl-, ein Cycloalkyl-, ein Alkenyl- oder ein Arylrest mit 1 bis 15 Kohlenstoffatomen ist,
wobei R¹⁰ ein Wasserstoff, ein Alkyl-, ein Cycloalkyl-, ein Alkenyl- oder ein Arylrest mit 1 bis 15 Kohlenstoffatomen ist,
wobei R¹¹ eine Alkylgruppe mit 1 bis 10 Kohlenstoffatomen ist,
wobei a, b, c, f, g, h jeweils eine ganze Zahl zwischen 0 und 3 sind,
wobei d und i jeweils eine ganze Zahl zwischen 0 und 3 sind und
wobei n größer oder gleich 1 und kleiner oder gleich 6 ist,
wobei das Polymer zumindest eine aus der Gruppe "Polyurethan, Polyester, Polyether, Polyol, Polyisobutylen, Isobutylen-Isopren-Copolymer, Polychloropren, Polyisopren, Styrol-Isopren-Copolymer und/oder deren hydrierte Varianten, Polybutadien, Styrol-Butadien-Copolymer und/oder deren hydrierte Varianten, Isopren-Butadien-Copolymer und/oder deren hydrierte Varianten, Styrol-Isobutylen-Copolymer, Polyamid, Polycarbonat, Alkylharz, Phenolharz, Vinylester, Vinylpolymer, Polyacrylat, Polymethylmethacrylat, Polyvinylalkohol" ausgewählte Komponente aufweist,
wobei das Polymer eine hydrolysierbare Organyl-Oxy-Silylgruppe mit der Formel
(-X-(CH₂)ₚ-(CR'R")_{z}-(CH₂)_{q}-SiR¹³_{y}(OR¹⁴)_{3-y})
aufweist,
wobei R' ein Wasserstoffatom, ein Alkyl-, ein Cycloalkyl, ein Alkenyl- oder ein Arylrest mit 1 bis 15 Kohlenstoffatomen ist,
wobei R" ein Wasserstoffatom, ein Alkyl-, ein Cycloalkyl-, ein Alkenyl- oder ein Arylrest mit 1 bis 15 Kohlenstoffatomen ist,
wobei R¹³ ein Alkyl-, ein Cycloalkyl-, ein Alkenyl- oder ein Arylrest mit 1 bis 10 Kohlenstoffatomen ist,
wobei R¹⁴ ein Alkylrest oder ein Alkoxyalkylrest ist,
wobei X eine zweibindige Bindegruppe ist, die aus der Gruppen "-O-, -S-, -R²²N-, -O-CO-NR²²-, -NR²²COO-, -NR²²-CONH-, -NHCONR²²-, -NR²²-CONR²²-" ausgewählt ist, wobei R²² ein Wasserstoffatom oder ein zyklischer oder linearer oder verzweigter C₁ bis C₁₈ Alkyl- oder Alkenylrest oder ein C₆ bis C₁₈ Arylrest ist,
wobei die Summe der Indizes p, q und z zwischen 1 und 6 liegt,
wobei der Index p eine ganze Zahl zwischen 0 und 3 ist,
wobei der Index q 0 oder 1 ist,
wobei der Index z den Wert 1 oder 3 hat,
und wobei y den Wert 0 oder 1 aufweist.

2. Härtbare Zusammensetzung nach Anspruch 1, wobei der Substituent R¹ ein Wasserstoffatom oder ein Substituent mit einer 1°-Aminfunktionalität ist und/oder wobei der Substituent R² ein Wasserstoffatom oder ein Substituent mit einer 1°-Aminfunktionalität ist.

3. Härtbare Zusammensetzung nach einem der Ansprüche 1 oder 2, **dadurch gekennzeichnet, dass** der Wert des Index d des Silans C größer ist als der Wert des Index i des Silans D.

4. Härtbare Zusammensetzung nach einem der Ansprüche 1 bis 3, **dadurch gekennzeichnet, dass** die Summe der Indizes a, b und c kleiner ist als die Summe der Indizes f, g und h.

5. Härtbare Zusammensetzung nach einem der Ansprüche 1 bis 4, **dadurch gekennzeichnet, dass** die Summe der Indizes a, b und c zumindest 1 und höchstens 6 ist und/oder dass die Summe der Indizes f, g und h zumindest 1 und höchstens 6 ist.

6. Härtbare Zusammensetzung nach einem der Ansprüche 1 bis 5, **dadurch gekennzeichnet, dass** das Silan C ein α-Silan ist und dass das Silan D ein γ-Silan ist.

7. Härtbare Zusammensetzung nach einem der Ansprüche 1 bis 6, **dadurch gekennzeichnet, dass** die Zusammensetzung 0,1 Gew.-% bis 3 Gew.-% des Silans C und dass die Zusammensetzung 0,1 Gew.-% bis 5 Gew.-% des Silans D enthält.

8. Härtbare Zusammensetzung nach einem der Ansprüche 1 bis 7, **dadurch gekennzeichnet, dass** die Zusammensetzung zumindest ein Trocknungsmittel, vorzugsweise ein Vinyltrimethoxysilan enthält.

9. Härtbare Zusammensetzung nach einem der Ansprüche 1 bis 8, **dadurch gekennzeichnet, dass** die Zusammensetzung zumindest einen Zusatzstoff, insbesondere einen Haftvermittler aufweist.

10. Härtbare Zusammensetzung nach einem der Ansprüche 1 bis 9, **dadurch gekennzeichnet, dass** die Zusammensetzung zumindest ein Silan B mit der Formel
R¹⁷ᵤ(CR¹⁸R¹⁹)ₜSiR²⁰_{w}(OR²¹)_{4-u-t-w}
enthält,
wobei R¹⁷ ein C₆ bis C₁₈-Arylrest oder ein C₄ bis C₁₈ Alkylrest oder ein Wasserstoffatom ist,
wobei R¹⁸ ein Wasserstoffatom oder ein Halogenatom oder ein Pseudohalogen ist,
wobei R¹⁹ ein Wasserstoffatom oder ein Halogenatom oder ein Pseudohalogen ist,
wobei R²⁰ ein Alkyl- oder Cycloalkyl- oder Alkenyl- oder Arylrest mit vorzugsweise 1 bis 10 Kohlenstoffatomen ist,
wobei R²¹ ein Alkylrest mit 1 bis 10 Kohlenstoffatomen ist,
wobei u, t, w jeweils eine ganze Zahl zwischen 0 und 3 sind.

11. Härtbare Zusammensetzung nach Anspruch 10, **dadurch gekennzeichnet, dass** die Zusammensetzung 0 Gew.-% bis 10 Gew.-% des Silans B enthält.

12. Verwendung einer härtbaren Zusammensetzung nach einem der Ansprüche 1 bis 11 als Dichtstoff und/oder Klebstoff.

## Claims

1. A curable composition based on at least one polymer, said polymer comprising at least one hydrolysable organo oxysilyl group,
wherein the composition comprises at least one silane C with a formula selected from the group formed by "R¹R²N-(CH₂)ₐ-(CR³R⁴)_{b}-(CH₂)_{c}-SiR⁵_{3-d}(OR⁶)_{d}, R¹R²N-(CH₂)ₐ-(CR³R⁴)_{b}-(CH₂)_{c}-SiR⁵(OR⁶)(OR⁶), R¹R²N-(CH₂)ₐ-(CR³R⁴)_{b}-(CH₂)_{c}-Si(OR⁶)(OR⁶')(OR⁶')",
wherein the substituent R⁶ and/or R^{6'} and/or R^{6"} of the silane C is respectively selected from the group formed by "alkyl residue with the formula -CₙH₂ₙ₊₁, alkoxyalkyl residue with the formula -CₙH₂ₙ-O-CₙH₂ₙ₊₁, alkoxyalkyl residue with the formula -CₙH₂ₙ-O-Cₙ₊₁H₂ₙ₊₃",
**characterized in that**
the composition has a water content of 400 ppm to 1000 ppm,
that the composition comprises at least one silane D which is different from the silane C having a formula selected from the group formed by "R⁷N⁸-(CH₂)_{f}-(CR⁹R¹⁰)_{g}-(CH₂)ₕ-SiR¹¹₃₋ᵢ(OR¹²)ᵢ, R⁷R⁸N-(CH₂)_{f}-(CR⁹R¹⁰)_{g}-(CH₂)ₕ-SiR¹¹(OR¹²)(OR¹²), R⁷R⁸N-(CH₂)_{f}-(CR⁹R¹⁰)_{g}-(CH₂)ₕ-Si(OR¹²)(OR^{12'})(OR^{12"})"
**in that** the silane C is a primary (1°) amine and the silane D is a secondary (2°) or tertiary (3°) amine
and/or
**in that** the index d is greater than or equal to the index i
or the substituent R¹² and/or R^{12'} and/or R^{12"} of the silane D is respectively selected from the group formed by "alkyl residue with the formula -Cₙ₊₁H₂ₙ₊₃, alkoxyalkyl residue with the formula -Cₙ₊₁H₂ₙ₊₂-O-CₙH₂ₙ₊₁, alkoxyalkyl residue with the formula -Cₙ₊₁H₂ₙ₊₂-O-Cₙ₊₁H₂ₙ₊₃, alkoxyalkyl residue with the formula -CₙH₂ₙ-O-Cₙ₊₂H₂ₙ₊₅",
wherein R¹ is a hydrogen or a substituent containing 1 to 15 carbon atoms selected from the group formed by "linear alkyl residue, branched alkyl residue, cyclic alkyl residue, 1° aminoalkyl residue, 2° aminoalkyl residue, aryl residue, alkenyl residue",
wherein R² is a hydrogen or a substituent containing 1 to 10 carbon atoms selected from the group formed by "linear alkyl residue, branched alkyl residue, cyclic alkyl residue, 1° aminoalkyl residue, 2° aminoalkyl residue, aryl residue, alkenyl residue",
wherein R³ is a hydrogen, an alkyl, a cycloalkyl, an alkenyl or an aryl residue containing 1 to 15 carbon atoms,
wherein R⁴ is a hydrogen, an alkyl, a cycloalkyl, an alkenyl or an aryl residue containing 1 to 15 carbon atoms,
wherein R⁵ is an alkyl group containing 1 to 10 carbon atoms,
wherein R⁷ is a hydrogen or a substituent containing 1 to 15 carbon atoms selected from the group formed by "linear alkyl residue, branched alkyl residue, cyclic alkyl residue, 1° aminoalkyl residue, 2° aminoalkyl residue, aryl residue, alkenyl residue",
wherein R⁸ is a hydrogen or a substituent containing 1 to 10 carbon atoms selected from the group formed by "linear alkyl residue, branched alkyl residue, cyclic alkyl residue, 1° aminoalkyl residue, 2° aminoalkyl residue, aryl residue, alkenyl residue",
wherein R⁹ is a hydrogen, an alkyl, a cycloalkyl, an alkenyl or an aryl residue containing 1 to 15 carbon atoms,
wherein R¹⁰ is a hydrogen, an alkyl, a cycloalkyl, an alkenyl or an aryl residue containing 1 to 15 carbon atoms,
wherein R¹¹ is an alkyl group containing 1 to 10 carbon atoms,
wherein a, b, c, f, g, h are respectively a whole number between 0 and 3,
wherein d and i are respectively a whole number between 0 and 3, and
wherein n is greater than or equal to 1 and less than or equal to 6,
wherein the polymer comprises at least one component selected from the group formed by "polyurethane, polyester, polyether, polyol, polyisobutylene, isobutylene-isoprene copolymer, polychloroprene, polyisoprene, styrene-isoprene copolymer and/or their hydrogenated variations, polybutadiene, styrene-butadiene copolymer and/or their hydrogenated variations, isoprene-butadiene copolymer and/or their hydrogenated variations, styrene-isobutylene copolymer, polyamide, polycarbonate, alkyl resin, phenol resin, vinyl ester, vinyl polymer, polyacrylate, polymethylmethacrylate, polyvinyl alcohol",
wherein the polymer comprises a hydrolysable organo oxysilyl group with the formula
(-X-(CH₂)ₚ-(CR'R")_{z}-(CH₂)_{q}-SiR¹³_{y}(OR¹⁴)_{3-y})
wherein R' is a hydrogen atom, an alkyl, a cycloalkyl, an alkenyl or an aryl residue containing 1 to 15 carbon atoms,
wherein R" is a hydrogen atom, an alkyl, a cycloalkyl, an alkenyl or an aryl residue containing 1 to 15 carbon atoms,
wherein R¹³ is an alkyl, a cycloalkyl, an alkenyl or an aryl residue containing 1 to 10 carbon atoms,
wherein R¹⁴ is an alkyl residue or an alkoxyalkyl residue,
wherein X is a divalent binding group which is selected from the groups "-O-, -S-, -R²²N-, -O-CO-NR²²-, -NR²²COO-, -NR²²-CONH-, -NHCONR²²-, -NR²²-CONR²²-", wherein R²² is a hydrogen atom or a cyclic or linear or branched C₁ to C₁₈ alkyl or alkenyl residue or a C₆ to C₁₈ aryl residue,
wherein the sum of the indices p, q and z is between 1 and 6,
wherein the index p is a whole number between 0 and 3,
wherein the index q is 0 or 1,
wherein the index z has the value 1 or 3,
and wherein y has the value 0 or 1.

2. The curable composition as claimed in claim 1, wherein the substituent R¹ is a hydrogen atom or a substituent with a 1° aminofunctionality and/or wherein the substituent R² is a hydrogen atom or a substituent with a 1° aminofunctionality.

3. The curable composition as claimed in claim 1 or claim 2, **characterized in that** the value of the index d for the silane C is larger than the value of the index i for the silane D.

4. The curable composition as claimed in one of claims 1 to 3, **characterized in that** the sum of the indices a, b and c is smaller than the sum of the indices f, g and h.

5. The curable composition as claimed in one of claims 1 to 4, **characterized in that** the sum of the indices a, b and c is at least 1 and at most 6 and/or in that the sum of the indices f, g and h is at least 1 and at most 6.

6. The curable composition as claimed in one of claims 1 to 5, **characterized in that** the silane C is an α-silane and **in that** the silane D is a γ-silane.

7. The curable composition as claimed in one of claims 1 to 6, **characterized in that** the composition contains 0.1% by weight to 3% by weight of silane C and **in that** the composition contains 0.1% by weight to 5% by weight of silane D.

8. The curable composition as claimed in one of claims 1 to 7, **characterized in that** the composition contains at least one dehydrating agent, preferably a vinyltrimethoxysilane.

9. The curable composition as claimed in one of claims 1 to 8, **characterized in that** the composition comprises at least one additive, in particular an adhesion promoter.

10. The curable composition as claimed in one of claims 1 to 9, **characterized in that** the composition contains at least one silane B with the formula
R¹⁷ᵤ(CR¹⁸R¹⁹)ₜSiR²⁰_{w}(OR²¹)_{4-u-t-w}
wherein R¹⁷ is a C₆ to C₁₈ aryl residue or a C₄ to C₁₈ alkyl residue or a hydrogen atom,
wherein R¹⁸ is a hydrogen atom or a halogen atom or a pseudohalogen,
wherein R¹⁹ is a hydrogen atom or a halogen atom or a pseudohalogen,
wherein R²⁰ is an alkyl or cycloalkyl or alkenyl or aryl residue, preferably containing 1 to 10 carbon atoms,
wherein R²¹ is an alkyl residue containing 1 to 10 carbon atoms,
wherein u, t, w are respectively a whole number between 0 and 3.

11. The curable composition as claimed in claim 10, **characterized in that** the composition contains 0% by weight to 10% by weight of silane B.

12. Use of a curable composition as claimed in one of claims 1 to 11 as a sealant and/or adhesive.

## Revendications

1. Composition durcissable à base d'au moins un polymère, lequel polymère présente au moins un groupe hydrolysable organyl-oxy-silyle, dans laquelle la composition présente au moins un silane C avec une formule choisie dans le groupe « R¹R²N-(CH₂)ₐ-(CR³ R⁴)_{b}-(CH²)_{c}-SiR⁵_{3-d}(OR⁶)_{d}, R¹R²N-(CH²)ₐ-(CR³ R⁴)_{b}-(CH₂)_{c}-SiR⁵(OR⁶)(OR^{6'}),R¹R²N-(CH₂)ₐ-(CR³R⁴)_{b}-(CH₂)_{c}-Si(OR⁶)(OR^{6"})(OR^{6"}) »,
dans laquelle le substituant R⁶ et/ou R^{6'} et/ou R^{6"} du silane C est respectivement choisi dans le groupe « reste alkyle de formule -CₙH₂ₙ₊₁, reste alcoxyalkyle de la formule -CₙH₂ₙ-O-CₙH₂ₙ₊₁, reste alcoxyalkyle de la formule -CₙH₂ₙ-O-Cₙ₊₁H₂ₙ₊₃ »,
**caractérisée en ce**
**que** la composition présente une teneur en eau de 400 ppm à 1000 ppm. que la composition présente au moins un silane D, différent du silane C, avec une formule choisie dans le groupe « R⁷R⁸N-(CH₂)_{f}-(CR⁹R¹⁰)_{g}-(CH₂)ₕ-SiR¹¹₃₋ᵢ(OR¹²)ᵢ,R⁷R⁸N-(CH₂)_{f}-(CR⁹R¹⁰)_{g}-(CH₂)ₕ-SiR¹¹(OR¹²)(OR¹²), R⁷R⁸N-(CH₂)_{f}-(CR⁹R¹⁰)_{g}-(CH₂)ₕ-Si(OR¹²)(OR^{12'})(OR^{12"}) »,
**que** le silane C est une amine primaire (1°) et le silane D, une amine secondaire (2°) ou tertiaire (3°)
et/ou
**que** l'indice d est supérieur ou égal à l'indice i
ou que le substituant R¹² et/ou R^{12'} et/ou R^{12"} du silane D est respectivement choisi dans le groupe « reste alkyle de formule - Cₙ₊₁H₂ₙ₊₃, reste alcoxyalkyle de la formule -Cₙ₊₁H₂ₙ₊₂-O-CₙH₂ₙ₊₁, reste alcoxyalkyle de la formule -Cₙ₊₁H₂ₙ₊₂-O-Cₙ₊₁H₂ₙ₊₃, reste alcoxyalkyle de la formule -CₙH₂ₙ-O-Cₙ₊₂H₂ₙ₊ »,
dans laquelle R¹ est de l'hydrogène ou un substituant avec 1 à 15 atomes de carbone choisi dans le groupe « reste alkyle linéaire, reste alkyle ramifié, reste alkyle cyclique, reste amino-alkyle 1°, reste amino-alkyle 2°, reste aryle, reste alcényle »,
dans laquelle R² est de l'hydrogène ou un substituant avec 1 à 10 atomes de carbone choisi dans le groupe « reste alkyle linéaire, reste alkyle ramifié, reste alkyle cyclique, reste amino-alkyle 1°, reste amino-alkyle 2°, reste aryle, reste alcényle »,
dans laquelle R³ est de l'hydrogène, un reste alkyle, cyclo-alkyle, alcényle ou aryle avec 1 à 15 atomes de carbone,
dans laquelle R⁴ est de l'hydrogène, un reste alkyle, cyclo-alkyle, alcényle ou aryle avec 1 à 15 atomes de carbone,
dans laquelle R⁵ est un groupe alkyle avec 1 à 10 atomes de carbone,
dans laquelle R⁷ est de l'hydrogène ou un substituant avec 1 à 15 atomes de carbone choisi dans le groupe « reste alkyle linéaire, reste alkyle ramifié, reste alkyle cyclique, reste amino-alkyle 1°, reste amino-alkyle 2°, reste aryle, reste alcényle »,
dans laquelle R⁸ est de l'hydrogène ou un substituant avec 1 à 10 atomes de carbone choisi dans le groupe « reste alkyle linéaire, reste alkyle ramifié, reste alkyle cyclique, reste amino-alkyle 1°, reste amino-alkyle 2°, reste aryle, reste alcényle »,
dans laquelle R⁹ est de l'hydrogène, un reste alkyle, cyclo-alkyle, alcényle ou aryle avec 1 à 15 atomes de carbone,
dans laquelle R¹⁰ est de l'hydrogène, un reste alkyle, cyclo-alkyle, alcényle ou aryle avec 1 à 15 atomes de carbone,
dans laquelle R¹¹ est un groupe alkyle avec 1 à 10 atomes de carbone,
dans laquelle a, b, c, f, g, h sont respectivement un nombre entier entre 0 et 3,
dans laquelle d et i sont respectivement un nombre entier entre 0 et 3 et
dans laquelle n est supérieur ou égal à 1 et inférieur ou égal à 6,
dans laquelle le polymère présente au moins un composant choisi dans le groupe « polyuréthane, polyester, polyéther, polyol, polyisobutylène, isobutylène-isoprène-copolymère, polychloroprène, polyisoprène, styrène-isoprène-copolymère et/ou ses variantes hydrogénées, polybutadiène, styrène-butadiène-copolymère et/ou ses variantes hydrogénées, isoprène-butadiène-copolymère et/ou ses variantes hydrogénées, styrène-isobutylène-copolymère, polyamide, polycarbonate, résine alkyle, résine phénolique, ester vinylique, polymère vinylique, polyacrylate, polyméthylméthacrylate, alcool polyvinylique »,
dans laquelle le polymère présente un groupe organyl-oxy-silyle de la formule
(-X-(CH₂)ₚ-(CR'R")_{z}-(CH₂)_{q}-SiR¹³_{y}(OR¹⁴)_{3-y}),
dans laquelle R' est un atome d'hydrogène, un reste alkyle, cyclo-alkyle, alcényle ou aryle avec 1 à 15 atomes de carbone,
dans laquelle R" est un atome d'hydrogène, un reste alkyle, cyclo-alkyle, alcényle ou aryle avec 1 à 15 atomes de carbone,
dans laquelle R¹³ est un reste alkyle, cyclo-alkyle, alcényle ou aryle avec 1 à 10 atomes de carbone,
dans laquelle R¹⁴ est un reste alkyle ou un reste alcoxyalkyle,
dans laquelle X est un groupe de liaison bivalent choisi parmi les groupes « -O-, -S-, -R²²N-, -O-CO-NR²²-, NR²²COO-, -NR²²-CONH-, - NHCONR²²-, -NR²²-CONR²²- », dans laquelle R²² est un atome d'hydrogène ou un reste alkyle ou alcényle en C₁ à C₁₈ cyclique ou linéaire ou ramifié, ou un reste aryle en C₆ à C₁₈,
dans laquelle la somme des indices p, q et z est comprise entre 1 et 6,
dans laquelle l'indice p est un nombre entier entre 0 et 3,
dans laquelle l'indice q est de 0 ou 1,
dans laquelle l'indice z a la valeur de 1 ou 3,
et dans laquelle y présente la valeur 0 ou 1.

2. Composition durcissable selon la revendication 1, dans laquelle le substituant R¹ est un atome d'hydrogène ou un substituant avec une fonction amine 1° et/ou dans laquelle le substituant R² est un atome d'hydrogène ou un substituant avec une fonction amine 1°.

3. Composition durcissable selon l'une des revendications 1 ou 2, **caractérisée en ce que** la valeur de l'indice d du silane C est supérieure à la valeur de l'indice i du silane D.

4. Composition durcissable selon l'une des revendications 1 à 3, **caractérisée en ce que** la somme des indices a, b et c est inférieure à la somme des indices f, g et h.

5. Composition durcissable selon l'une des revendications 1 à 4, **caractérisée en ce que** la somme des indices a, b et c est au moins de 1 et au maximum de 6 et/ou que la comme des indices f, g et h est au moins de 1 et au maximum de 6.

6. Composition durcissable selon l'une des revendications 1 à 5, **caractérisée en ce que** le silane C est un silane α et que le silane D est un silane γ.

7. Composition durcissable selon l'une des revendications 1 à 6, **caractérisée en ce que** la composition contient 0,1% en poids à 3% en poids du silane C et que la composition contient 0,1% en poids à 5% en poids du silane D.

8. Composition durcissable selon l'une des revendications 1 à 7, **caractérisée en ce que** la composition contient au moins un agent de séchage, de préférence un vinyltriméthoxysilane.

9. Composition durcissable selon l'une des revendications 1 à 8, **caractérisée en ce que** la composition présente au moins un additif, en particulier un agent liant.

10. Composition durcissable selon l'une des revendications 1 à 9, **caractérisée en ce que** la composition contient au moins un silane B de la formule
R¹⁷ᵤ(CR¹⁸R¹⁹)ₜSiR²⁰_{w}(OR²¹)_{4-u-t-w},
dans laquelle R¹⁷ est un reste aryle en C₆ à C₁₈ ou un reste alkyle en C₄ à C₁₈ ou un atome d'hydrogène,
dans laquelle R¹⁸ est un atome d'hydrogène ou un atome d'halogène ou un pseudo-halogène,
dans laquelle R¹⁹ est un atome d'hydrogène ou un atome d'halogène ou un pseudo-halogène,
dans laquelle R²⁰ est un reste alkyle ou cyclo-alkyle ou alcényle ou aryle avec de préférence 1 à 10 atomes de carbone,
dans laquelle R²¹ est un reste alkyle avec 1 à 10 atomes de carbone,
dans laquelle u, t, w sont respectivement un nombre entier entre 0 et 3.

11. Composition durcissable selon la revendication 10, **caractérisée en ce que** la composition contient 0% en poids à 10% en poids du silane B.

12. Utilisation d'une composition durcissable selon l'une des revendications 1 à 11 en tant que produit d'étanchéité et/ou adhésif.
